# EUROPEAN PATENT APPLICATION

(11) **EP 4 769 592 A1**
(43) Date of publication of application: **01.07.2026**
(21) Application number: 25199598.1
(22) Date of filing: 02.09.2025
(51) Int. Cl.: H01M 10/04, B29C 33/40, B29C 45/14, B29C 45/17, H01M 10/0585, H01M 50/20

(54) **BATTERY PACK MANUFACTURING DEVICE AND METHOD OF MANUFACTURING A BATTERY PACK**

(30) Priority: 11.12.2024 KR 20240184177
(71) Applicant: SAMSUNG SDI CO., LTD., Yongin-si, Gyeonggi-do 17084 (KR)
(72) Inventor: HUR, Sang Do, 16678 Suwon-si (KR)
(74) Representative: Marks & Clerk LLP

(57) **Abstract**

The present disclosure relates to a battery pack (100) manufacturing device and a method of manufacturing a battery pack (100), and a technical object to be achieved is to provide a battery pack (100) manufacturing device which includes a core molding jig (200) having a plurality of molding parts (230) on which a core pack (110) is seated to minimize a melting cycle, thereby increasing productivity and reducing a mold cost by standardizing the core molding jig (200), and a method of manufacturing a battery pack (100). To this end, a battery pack (100) manufacturing device includes a core molding jig (200) including a molding part (230) on which a core pack (110) of which a bare cell (112) and a protection circuit part (114) are coupled is seated, a mold part (300) which fixes the core molding jig (200), and an injection part (400) which is provided at the mold part (300) and performs a hot-melting process on the molding part (230) to form a resin molding portion (120) on the core pack (110), wherein the molding part (230) is formed as a plurality of molding parts (230) so that a plurality of core packs are seated on the plurality of molding parts (230).

## Description

### FIELD

The present disclosure relates to a battery pack manufacturing device and a method of manufacturing a battery pack.

### BACKGROUND

In general, secondary batteries are batteries that can be charged and discharged unlike primary batteries that cannot be charged, are manufactured in the form of battery pack, and are widely used as power sources of portable electronic devices such as cellular phones, notebook computers, personal digital assistants (PDAs), and cam coders.

Particularly, among the secondary batteries, lithium secondary batteries are more suitable for portable electronic devices due to an operating voltage and a high energy density per weight.

The herein information disclosed in this Background section is provided for enhancement of understanding of the background of the present disclosure, and, therefore, it may contain information that does not form related or prior art.

### SUMMARY

The present disclosure is directed to providing a battery pack manufacturing device which includes a core molding jig having a plurality of molding parts on which a core pack is seated to minimize a melting cycle, thereby increasing productivity and reducing a mold cost by standardizing the core molding jig, and a method of manufacturing a battery pack.

These and other aspects and features of the present disclosure will be described in or will be apparent from the following description of some embodiments of the present disclosure.

In accordance with aspects of the present disclosure, there is provided a battery pack manufacturing device including a core molding jig including a molding part on which a core pack of which a bare cell and a protection circuit part are coupled is seated, a mold part which fixes the core molding jig, and an injection part which is provided at the mold part and performs a hot-melting process on the molding part to form a resin molding portion on the core pack, wherein the molding part is formed as a plurality of molding parts so that a plurality of core packs are seated on the plurality of molding parts.

The core molding jig may be provided as a plurality of core molding jigs, and the molding part of each of the core molding jigs may be used to manufacture the core pack according to various specifications.

The core molding jig may include a first jig and a second jig which are disposed to face one another, and movement prevention parts corresponding to one another may be formed in the first jig and the second jig.

The movement prevention parts may include a movement prevention block formed to protrude from the first jig and a movement prevention groove formed to be recessed in the second jig such that the movement prevention block is inserted into the movement prevention groove.

A shape of the movement prevention part formed on one side of each of the first jig and the second jig may be different from a shape of the movement prevention part formed on another side thereof.

The core molding jig may include a guide part which guides coupling of the first jig and the second jig.

The guide part may include a guide groove formed in the first jig and a guide boss formed to protrude from the second jig to be inserted into the guide groove.

The core molding jig may include a guide path which guides a resin, and the guide path may include an injection port connected to the injection part, a main path which guides the resin introduced into the injection port in a lateral direction and a vertical direction of the core molding jig, and a branch path which connects the main path to the molding part.

The mold part may include a die, a fixing groove which is formed in an upper portion of the die and fixes the core molding jig, and a pressing part which is provided above the die and presses the core molding jig toward the die.

The battery pack manufacturing device may include a vacuum degassing part which removes gas in the molding part after the resin molding portion is molded by the molding part.

The vacuum degassing part may include a coupling part to which the core molding jig is coupled and a gas discharge part which is provided on the coupling part and discharges the gas from the molding part.

In accordance with aspects of the present disclosure, there is provided a method of manufacturing a battery pack, which includes a core pack forming operation of coupling a protection circuit part to an upper portion of a bare cell to form a core pack, a seating operation of seating the core pack on a molding part of a core molding jig, and a molding operation of coupling the core molding jig to a mold part and forming a resin molding portion surrounding a portion of the core pack, wherein a plurality of molding parts are formed in the core molding jig such that a plurality of core packs are seated on the plurality of molding parts.

The core molding jig may be provided as a plurality of core molding jigs, and the molding part of each of the core molding jigs may be used to manufacture the core pack according to various specifications.

The molding operation may include a fixing operation of fixedly pressing an upper portion of the core molding jig seated on the mold part using a press and an injecting operation of injecting a resin through an injection port of the core molding jig which is being pressed by the press.

The resin may be formed of a polyamide-based hot melt resin with high adhesive strength.

A gas removing operation of discharging gas from the molding part may be performed after the molding operation is performed.

A cover assembly operation of taking the core pack out of the molding part and assembling an upper cover and a lower cover to the core pack may be performed after the gas removing operation is performed.

An exterior material installation operation of installing an exterior material on the core pack may be performed after the cover assembly operation is performed.

The exterior material installation operation includes a strength reinforcement operation of attaching a metal plate to reinforce strength of an outer surface of the core pack and a packaging operation of attaching an external label to the outer surface of the core pack while the metal plate is attached to the outer surface.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic diagram illustrating a configuration of a battery pack manufacturing device according to embodiments of the present disclosure;
FIG. 2 is a schematic perspective view illustrating a core pack according to embodiments of the present disclosure;
FIG. 3 is an exploded perspective view illustrating a core molding jig of the battery pack manufacturing device according to embodiments of the present disclosure;
FIG. 4 is a view illustrating an inner molding part of the core molding jig according to embodiments of the present disclosure;
FIG. 5 is a view illustrating a modified example of a molding part of the molding jig according to embodiments of the present disclosure core;
FIG. 6 is a set of views illustrating molding parts according to various specifications for the core molding jig according to embodiments of the present disclosure;
FIG. 7 is a perspective view illustrating a mold part of the battery pack manufacturing device according to embodiments of the present disclosure;
FIG. 8 is a perspective view illustrating a vacuum degassing part of the battery pack manufacturing device according to embodiments of the present disclosure;
FIG. 9 is a view for describing a process of manufacturing a battery pack according to embodiments of the present disclosure;
FIG. 10 is a view illustrating a core pack hot-melted by the battery pack manufacturing device according to embodiments of the present disclosure.
FIGS. 11 to 15 are views illustrating a process of forming the battery pack according to embodiments of the present disclosure; and
FIG. 16 is a flowchart illustrating a method of manufacturing a battery pack according to embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure. "Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element or feature as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented e.g., rotated 90 degrees or at other orientations, and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between and including the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same. "Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed or located or positioned "above or below" or "on or under" a component, it may mean that the arbitrary element is placed in contact with the upper or lower surface of the component and may also mean that another component may be interposed between the component and any arbitrary element disposed or located or positioned on or under the component.

In addition, it is to be understood that when an element is referred to as being "coupled," "linked," or "connected" to another element, the elements may be directly "coupled," "linked," or "connected" to one another, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to one another.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

Conventionally, a battery pack of a lithium secondary battery has a bare cell, which is a basic component and includes an electrode assembly, in which a positive electrode plate and a negative electrode plate are wound with a separator interposed therebetween, and an inner case, which seals the electrode assembly and exposes a positive terminal and a negative terminal, and is completely formed by sealing an outer surface of the bare cell with an outer case while a safety device such as a protection circuit is mounted on the outer surface of the bare cell.

As one example of the battery pack, a polymer battery pack includes a core pack of which a protection circuit member is bonded to a pouch type bare cell, a case surrounding the core pack, and the like. In this case, the pouch type bare cell is a lithium polymer battery having a pouch formed of cast polypropylene (CPP)/aluminum/nylon (or polyethylene terephthalate (PET)) in which a polymer electrolyte and an electrode assembly including a positive electrode, a separator, and a negative electrode are accommodated. For reference, the polymer battery pack or lithium polymer battery is named to distinguish it from a battery pack or lithium-ion battery which uses a liquid electrolyte.

Meanwhile, in the polymer battery pack, since the general pouch constituting the bare cell is made in the form of an aluminum foil and is easily damaged by an external impact, there is a problem of degraded reliability. Accordingly, the polymer battery pack includes a case which surrounds the core pack in order to protect the core pack in which the protection circuit member is attached to the pouch type bare cell.

The conventional battery pack includes a bare cell capable of being charged and discharged, a protection circuit board which is electrically coupled to the bare cell, controls charging and discharging, and blocks a circuit from over-charging or over-discharging, and a resin molding portion which is an outer case and is formed to be mounted on an external set while preventing the protection circuit board from being separated from the bare cell through a hot melting method through which a hot melt resin fills a gap between the bare cell and the protection circuit board.

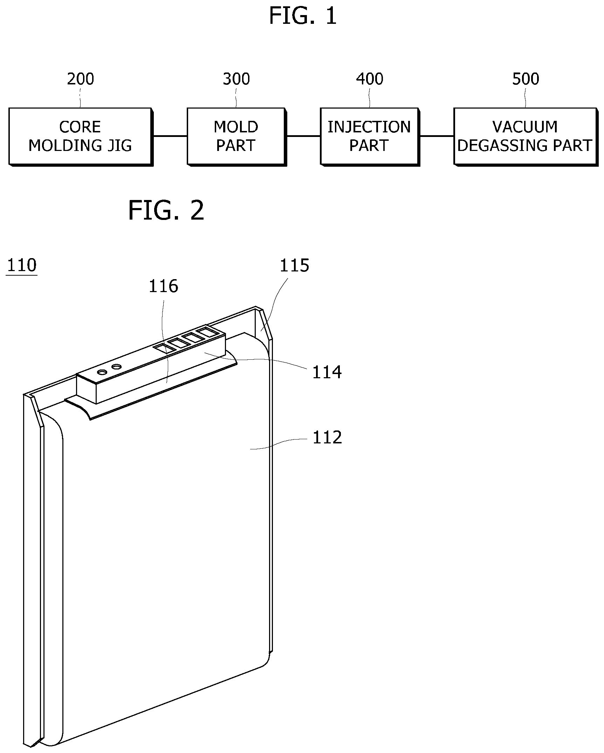

FIG. 1 is a schematic diagram illustrating a configuration of a battery pack manufacturing device according to embodiments of the present disclosure.

Referring to FIG. 1, the battery pack manufacturing device according to embodiments of the present disclosure may include a core molding jig 200, a mold part 300, and an injection part 400.

The battery pack manufacturing device according to embodiments shapes a battery pack 100 using a hot melt resin on a core pack 110.

First, a bare cell 112 constituting the core pack 110 will be described herein.

FIG. 2 is a schematic perspective view illustrating a core pack according to embodiments of the present disclosure.

Referring to FIG. 2, in embodiments, either of a prismatic battery and a pouch type battery may be used as the bare cell 112, and an example of the pouch type battery will be described herein.

A pouch 115 surrounds an exterior of the pouch type bare cell 112 constituting the core pack 110. In the pouch 115, two long sides are formed opposite to one another and have relatively large areas, and short sides have relatively small areas along edges of the long sides, are formed in a height direction at left and right sides, and are bent at predetermined angles to minimize a width of the pouch type bare cell 112, when referring to the drawing.

An electrode assembly (not shown) wound multiple times is built into the inside of the long sides and short sides constituting the pouch 115.

In a typical electrode assembly, a multilayer, in which a positive electrode plate, a separator, and a negative electrode plate are sequentially stacked, is wound in a spiral shape to be made in the form of a jelly roll. When the electrode assembly is wound to form the jelly roll, the separator is attached to an electrode surface exposed to the outside of the roll or an internal electrode surface in order to prevent a short circuit between the positive electrode and the negative electrode. The formed jelly roll is disposed in a groove formed in a front surface of the pouch 115.

In addition, the bare cell 112, which is a battery, is formed by covering the front surface of the pouch 115 with a rear surface of the pouch 115 such that edges of the groove are in close contact with one another, pressing and heating the edges to seal the pouch 115, and bending an end surface portion of the pouch 115.

In this case, end portions of electrode tabs (not shown) exposed at electrode plates of the electrode assembly are exposed to the outside of the pouch 115. The exposed electrode tabs are electrically connected to a protection circuit part 114 installed for the stability of the battery. In other words, the protection circuit part 114 is seated on an upper portion of the bare cell 112, that is, an upper portion between the short sides formed on the left and right, and the bare cell 112 and the protection circuit part 114 are electrically connected to form the core pack 110.

A protection circuit, such as a circuit for maintaining a unform charging state or a circuit for preventing over-discharging and over-charging by controlling the charging and discharging of the battery, is formed on a printed circuit board in the protection circuit part 114 constituting the core pack 110.

In addition, protection elements such as thermistors or temperature fuses may be mounted on the protection circuit part 114, and the protection elements also prevent risks such as battery rupture and fire by blocking a current when a voltage or current of the battery exceeds the specified level due to an increase in temperature or over-charging and over-discharging of the battery.

Meanwhile, an insulating sheet 116 may be further formed on an upper surface of the pouch type bare cell 112 in order to prevent a short circuit due to undesired contact between the protection circuit part 114 and the pouch type bare cell 112.

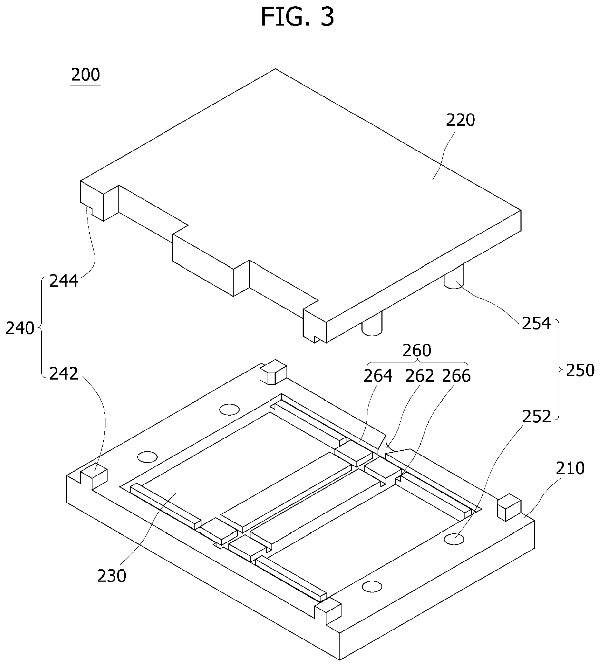

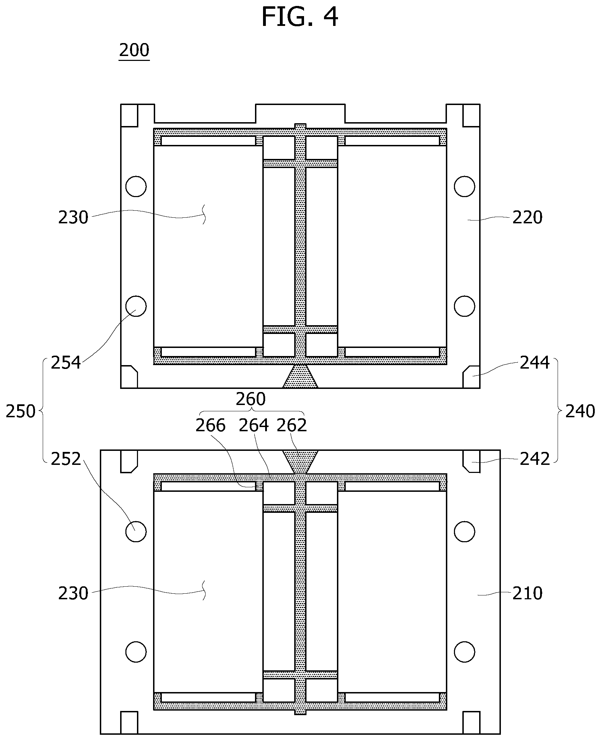

FIG. 3 is an exploded perspective view illustrating the core molding jig of the battery pack manufacturing device according to embodiments of the present disclosure, and FIG. 4 is a view illustrating an inner molding part of the core molding jig according to embodiments of the present disclosure.

The core molding jig 200 may include a molding part 230 on which the core pack 110 of which the bare cell 112 and the protection circuit part 114 are coupled is seated.

The core molding jig 200 may include a first jig 210 and a second jig 220 disposed to face one another.

The first jig 210 and the second jig 220 may be formed in rectangular shapes and respectively disposed at lower and upper sides to correspond to one another. In addition, the first jig 210 may be coupled with the second jig 220 to form the molding part 230.

Movement prevention parts 240 corresponding to one another may be formed in the first jig 210 and the second jig 220. The movement prevention parts 240 may include movement prevention blocks 242 formed to protrude from the first jig 210 and movement prevention grooves 244 formed to be recessed into the second jig 220 such that the movement prevention blocks 242 are inserted into the movement prevention grooves 244.

The locations of the movement prevention blocks 242 and the movement prevention grooves 244 may be interchanged.

The movement prevention blocks 242 may be formed at corners of the first jig 210 to protrude in polygonal shapes. In addition, the movement prevention grooves 244 may be formed at corners of the second jig 220 to be recessed in polygonal shapes such that the movement prevention blocks 242 are engaged with the movement prevention grooves 244. That is, the movement prevention parts 240 may function as components for coupling the first jig 210 and the second jig 220.

In this case, the shapes of the movement prevention parts 240 formed at one sides of the first jig 210 and the second jig 220 may be different from the shapes of the movement prevention parts 240 formed at the other sides thereof. The different shapes are for aligning the coupling directions of the first jig 210 and the second jig 220 and may prevent incorrect assembly between the first jig 210 and the second jig 220 due to human errors.

The core molding jig 200 may include guide parts 250 which guide the coupling of the first jig 210 and the second jig 220.

As an example, the guide parts 250 may include guide grooves 252 formed in the first jig 210 and guide bosses 254 formed to protrude from the second jig 220 to be inserted into the guide grooves 252.

The locations of the guide grooves 252 and the guide boss 254 may be interchanged.

The molding part 230 formed in the core molding jig 200 may be formed as a space in which the core pack 110 may be seated. That is, the molding parts 230 may be formed to face one another in the first jig 210 and the second jig 220.

Referring to FIG. 4, the core molding jig 200 includes guide paths 260 for guiding a resin. The guide path 260 may include an injection port 262 connected to the injection part 400, a main path 264 for guiding the resin introduced into the injection port 262 in a lateral direction and a vertical direction of the core molding jig 200, and a branch path 266 which connects the main path 264 to the molding part 230.

The guide paths 260 may also be formed to face one another in the first jig 210 and the second jig 220.

The resin introduced through the injection port 262 may be delivered to the periphery of the molding part 230 through the main path 264. In addition, the resin flowing in the main path 264 may be introduced into the molding part 230 through each branch path 266. As the branch paths 266 are formed in portions of the periphery of the molding part 230, the speed and injection amount of the resin introduced into the molding part 230 may be substantially uniform.

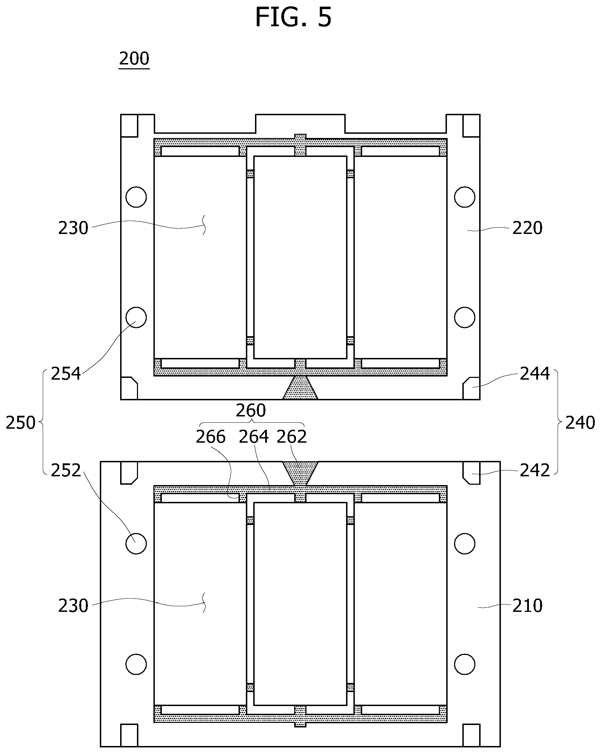

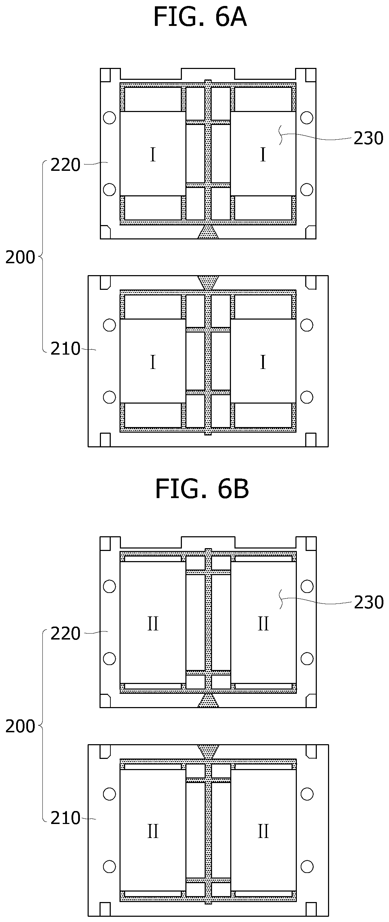

FIG. 5 is a view illustrating a modified example of the molding parts of the molding jig according to embodiments of the present disclosure core, and FIG. 6 is a set of views showing molding parts according to various specifications for the core molding jig according to embodiments of the present disclosure.

A plurality of molding parts 230 of a core molding jig 200 according to embodiments may be formed in a space formed by the core molding jig 200.

Referring to FIG. 5, three molding parts 230 may be formed in the core molding jig 200. However, a larger number of molding parts 230 may be formed in the core molding jig 200 to maximize productivity.

Referring to FIG. 6, a plurality of core molding jigs 200 according to embodiments may be formed, a molding part 230 of each of the core molding jigs 200 may be applied to manufacture a core pack 110 according to any of various specifications.

That is, a core pack 110 according to a first specification I may be molded by the molding parts 230 of the core molding jig 200 illustrated in FIG. 6A, and a core pack 110 according to a second specification II may be molded by the molding parts 230 of the core molding jig 200 illustrated in FIG. 6B. As described herein, since the core molding jig 200 is manufactured according to a standard specification, and the molding parts 230 according to different specifications are manufactured, the mold part 300 may be standardized to reduce a mold cost.

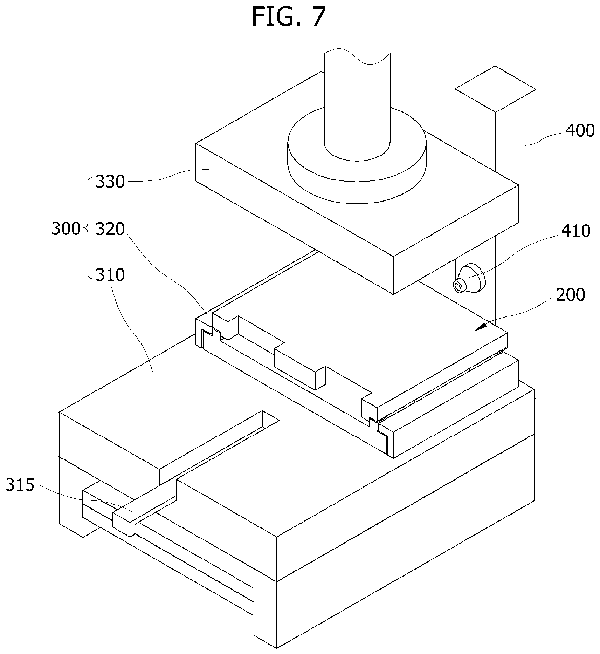

FIG. 7 is a perspective view illustrating the mold part of the battery pack manufacturing device according to embodiments of the present disclosure.

Referring to FIG. 7, the mold part 300 according to embodiments may function as a component for fixing the core molding jig 200.

As an example, the mold part 300 according to embodiments may include a die 310, fixing grooves 320, and a pressing part 330. The die 310 may be formed in a flat plate shape to form a space in which the core molding jig 200 may be seated.

The fixing groove 320 may be provided in an upper portion of the die 310 and function as a component for fixing the core molding jig 200.

The cross sections of the fixing grooves 320 may be formed in "┐" shapes facing one another such that the core molding jig 200 is slidably inserted therebetween. In this case, the die 310 may include a slide operation part 315 which allows the core molding jig 200 to be inserted between the fixing grooves 320 in position. That is, when the core molding jig 200 is seated on the slide operation part 315 and slidably moved by the slide operation part 315, both sides of the core molding jig 200 are fitted into the fixing grooves 320 so that the core molding jig 200 may be fixed in position.

The pressing part 330 may be provided above the die 310 and function as a component which presses the core molding jig 200 toward the die 310 to prevent the core molding jig 200 from opening. That is, since the second jig 220 is pressed by the pressing part 330, the molding part 230 may be sealed, and the resin can be prevented from leaking out of the molding part 230.

The injection part 400 is provided at one side of the mold part 300. That is, an injection nozzle 410 of the injection part 400 is provided to be aligned with the injection port 262 of the core molding jig 200 fixed to the mold part 300, and as the injection nozzle 410 is coupled to the injection port 262, the resin may be injected into the molding part 230. In this case, the resin may be provided as a polyamide-based hot melt resin with high adhesive strength.

When the resin is injected by the injection part 400 while the core molding jig 200 is engaged with the pressing part 330, the resin may be introduced into each portion of the molding part 230 along the guide path 260 and cured for a predetermined time to form a resin molding portion 120 on the periphery of the core pack 110.

In the embodiment, a vacuum degassing part 500 for removing gas in the molding part 230 may be further included.

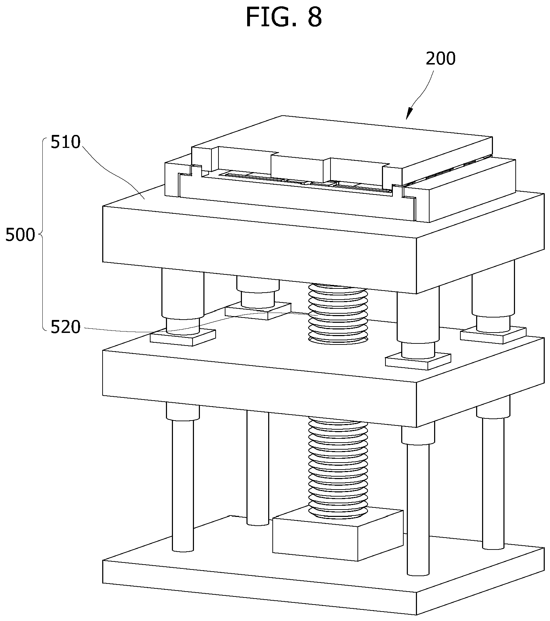

FIG. 8 is a perspective view illustrating the vacuum degassing part of the battery pack manufacturing device according to embodiments of the present disclosure.

Referring to FIG. 8, the vacuum degassing part 500 according to embodiments may function as a component for removing the gas in the molding part 230 after the resin molding portion 120 is molded by the molding part 230.

The vacuum degassing part 500 may include a coupling part 510 to which the core molding jig 200 is coupled and a gas discharge part 520 which is provided in the coupling part 510 and discharges the gas from the molding part 230.

This is to discharge the gas generated from a carbonized resin or internal residual air during a molding process, and the resin may be carbonized to generate a gas while the hot melt resin is melted at high temperatures, and molding defects occurring due to bubbles generated in a product or nonuniform molding can be prevented.

More specifically, the gas may be discharged by injecting compressed air into the core molding jig 200 using the gas discharge part 520 to push out the gas trapped in the core molding jig 200, thereby improving the quality of the resin molding portion 120, and securing the stability of a manufacturing process.

The core molding jig 200 from which the gas is discharged by the vacuum degassing part 500 may be separated from the vacuum degassing part 500, and the core pack 110 may be separated from the core molding jig 200 to form the core pack 110 on which the resin molding portion 120 is formed. The resin molding portion 120 may be formed on a portion excluding the protection circuit part 114 and the front and rear surfaces of the core pack 110.

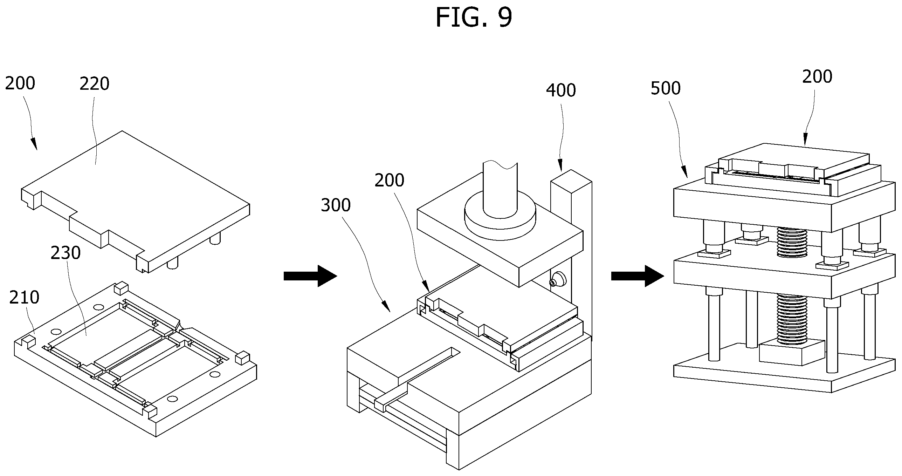

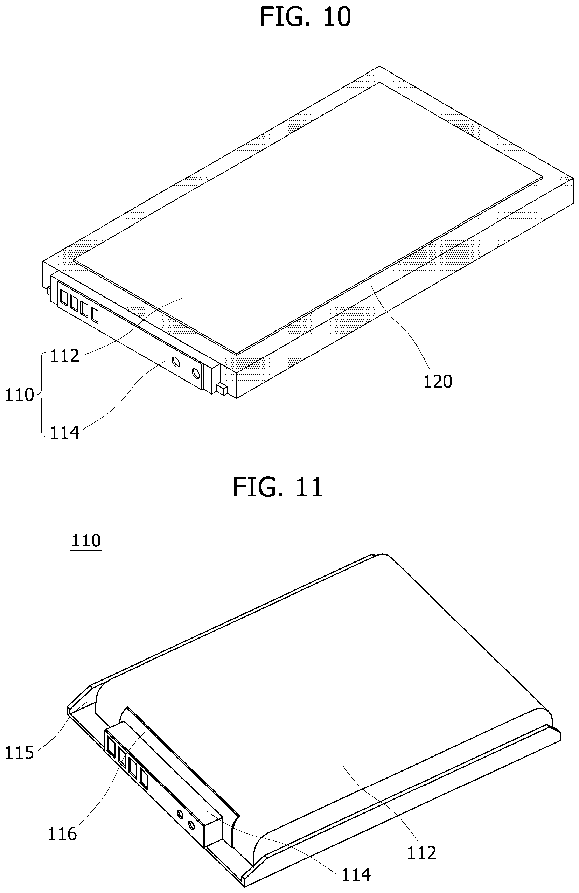

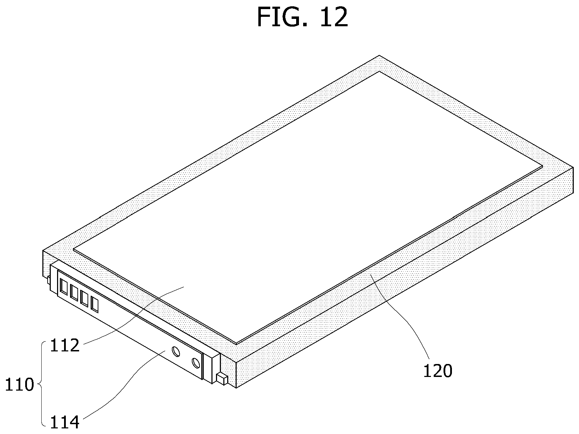

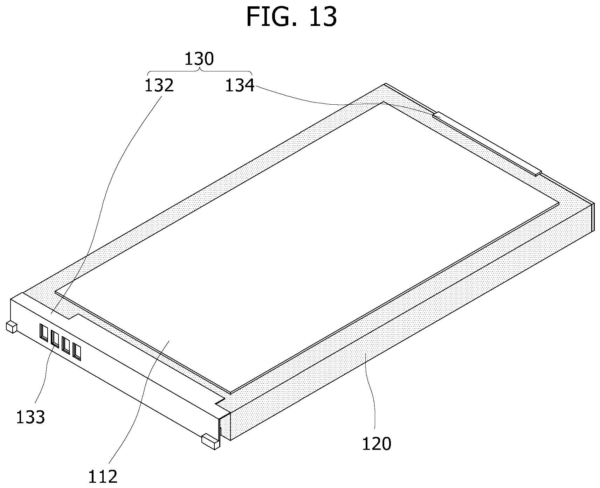

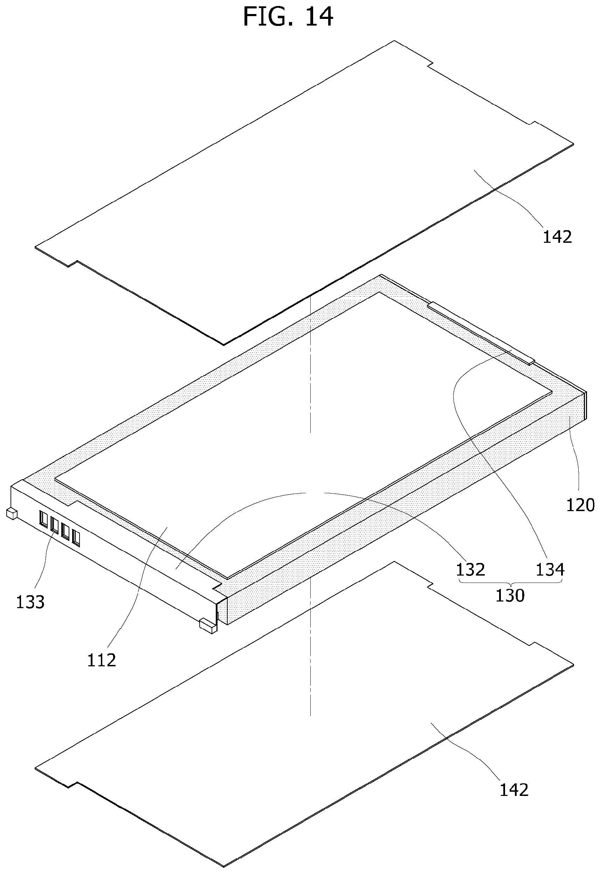

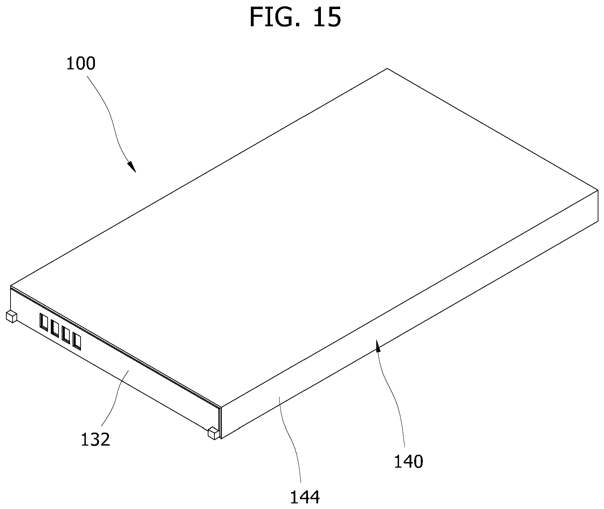

FIG. 9 is a view for describing a process of manufacturing a battery pack according to embodiments of the present disclosure, and FIG. 10 is a view illustrating the core pack hot-melted by the battery pack manufacturing device according to embodiments of the present disclosure. FIGS. 11 to 15 are views illustrating a process of forming the battery pack according to embodiments of the present disclosure.

Referring to FIGS. 9 to 15, a cover 130 and an exterior material 140 may be coupled to the core pack 110 on which the resin molding portion 120 is formed to form the battery pack 100.

An upper cover 132 and a lower cover 134 may be attached to an upper portion and a lower portion of the core pack 110 on which the resin molding portion 120 is formed.

The upper cover 132 may be coupled to cover the protection circuit part 114, and an external terminal part 133 may be formed in the upper cover 132. The external terminal part 133 is a part for electrically connecting an external device (not shown) to the protection circuit part 114 and is formed such that a conductive metal part is exposed on an upper surface of the upper cover 132.

In addition, an outer surface of the core pack 110 on which the resin molding portion 120 is formed may be coupled to the exterior material 140. The exterior material 140 may include a metal plate 142 and an external label 144 for maintaining rigidity.

The metal plate 142 is a component which covers a portion, excluding the protection circuit part 114, of the core pack 110 on which the resin molding portion 120 is formed and secures external strength using a stainless steel material for protection from the outside.

The external label 144 may be formed to surround the core pack 110 and the metal plate 142 to form the battery pack 100.

Hereinafter, a method of manufacturing a battery pack according to embodiments of the present disclosure will be described herein.

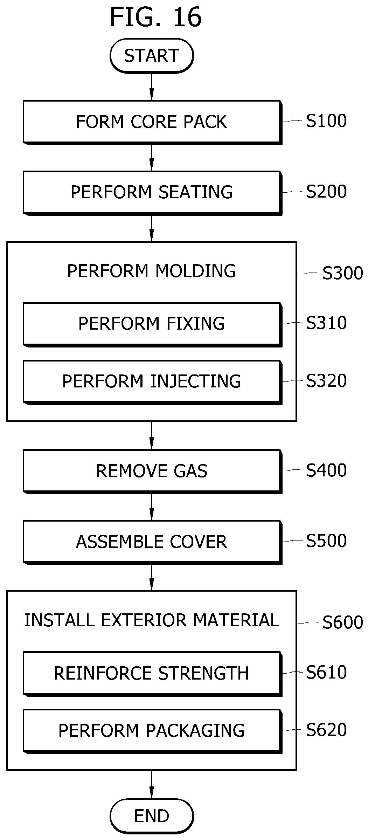

FIG. 16 is a flowchart illustrating the method of manufacturing a battery pack according to embodiments of the present disclosure.

Referring to FIGS. 1 to 16, the method of manufacturing a battery pack of the present disclosure may include a core pack forming operation S100, a seating operation S200, and a molding operation S300.

In the core pack forming operation S100, the protection circuit part 114 is coupled to the upper portion of the bare cell 112 to form the core pack 110. End portions of the electrode tabs exposed to the outside of the pouch 115 are joined to protection circuit part 114 by welding to form the core pack 110 (see FIG. 11).

The core pack 110 formed as described herein is seated on the molding part 230 of the core molding jig 200 (S200). The molding part 230 of the core molding jig 200 may be formed as a plurality of molding parts 230 in a space formed by the core molding jig 200, thereby maximizing productivity.

In addition, the core molding jig 200 may be provided as a plurality of core molding jigs 200, the molding parts 230 of each of the core molding jigs 200 may be applied to the manufacture of the core pack 110 with any of various specifications. That is, as the core molding jig 200 is manufactured according to a standard specification and molding parts 230 of different specifications are provided, the mold part 300 may be standardized to reduce a mold cost.

Then, the molding operation S300 is performed. In the molding operation S300, the core molding jig 200 is coupled to the mold part 300, and the resin molding portion 120 surrounding a portion of the core pack 110 is formed, and the molding operation S300 may include a fixing operation S310 and an injecting operation S320.

In the fixing operation S310, the core molding jig 200 is seated on the slide operation part 315 provided in the die 310, slidably moved, and fixed to the fixing groove 320 in position, and then the core molding jig 200 is pressed by the pressing part 330 to seal the molding part 230. Then, in the injecting operation S320, the injection nozzle 410 of the injection part 400 is connected to the injection port 262 and injects a resin into the molding part 230. The resin injected into the injection port 262 may enter the periphery of the molding part 230 along the main path 264 and may be introduced into each portion of the molding part 230 along the branch path 266 at the same time.

After the molding operation S300 is performed, a gas removing operation S400 may be further performed. The gas removing operation S400 is for discharging gas from the molding part 230 and is performed by the vacuum degassing part 500, and the core molding jig 200 is coupled to the coupling part 510, compressed air is injected into the core molding jig 200 to push the gas trapped in the core molding jig 200 using the gas discharge part 520 to discharge the gas generated from the carbonized resin or internal residual air during a molding process, thereby improving the quality of the resin molding portion 120, and securing the stability of the manufacturing process.

In addition, as the compressed air is injected in the gas removing operation S400, the first jig 210 may be separated from the second jig 220, and thus it is easy to remove the core pack 110 on which the resin molding portion 120 is formed.

After the gas removing operation S400 is performed, a cover assembly operation S500 in which the core pack 110 is taken out of the molding part 230 and the upper cover 132 and the lower cover 134 are assembled to the core pack 110 is performed. The upper cover 132 and the lower cover 134 may be coupled to the core pack 110 using a tape and a hook.

In addition, after the cover assembly operation is performed, an exterior material installation operation S600 of installing the exterior material 140 on the outer surface of the core pack 110 is performed. The exterior material installation operation S600 may include a strength reinforcement operation S610 of attaching the metal plate 142 to the outer surface of the core pack 110 for strength reinforcement and a packaging operation S620 of attaching the external label 144 to the outer surface of the core pack 110 while the metal plate 142 is attached thereto.

The metal plate 142 is a component which covers a portion, excluding the protection circuit part 114, of the core pack 110 on which the resin molding portion 120 is formed and secures external strength using a stainless steel material for protection from the outside.

The external label 144 may be formed to surround the core pack 110 and the metal plate 142 to form the battery pack 100.

As described herein, according to the present disclosure, as the core molding jig having a plurality of molding parts in which the core pack is seated is provided, a melting cycle is minimized, and thus productivity can be improved, and a mold cost can be reduced by standardizing the mold part on which the core molding jig is seated.

According to the present disclosure, a core molding jig having a plurality of molding parts on which a core pack is seated is provided to minimize a melting cycle, thereby improving productivity.

According to the present disclosure, a mold cost can be reduced by standardizing a mold part on which a core molding jig is seated.

However, the effects obtainable through the present disclosure are not limited to the herein effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims.

Embodiments are set out in the following clauses:
1. A battery pack manufacturing device comprising:
   a core molding jig including a molding part on which a core pack of which a bare cell and a protection circuit part are coupled is seated;
   a mold part which fixes the core molding jig; and
   an injection part which is provided at the mold part and performs a hot-melting process on the molding part to form a resin molding portion on the core pack,
   wherein the molding part is formed as a plurality of molding parts so that a plurality of core packs are seated on the plurality of molding parts.
2. The battery pack manufacturing device according to clause 1, wherein:
   the core molding jig is provided as a plurality of core molding jigs; and
   the molding part of each of the core molding jigs is used to manufacture the core pack according to various specifications.
3. The battery pack manufacturing device according to clause 1 or 2, wherein:
   the core molding jig includes a first jig and a second jig which are disposed to face one another; and
   movement prevention parts corresponding to one another are formed in the first jig and the second jig.
4. The battery pack manufacturing device according to clause 3, wherein the movement prevention parts include:
   a movement prevention block formed to protrude from the first jig; and
   a movement prevention groove formed to be recessed in the second jig such that the movement prevention block is inserted into the movement prevention groove.
5. The battery pack manufacturing device according to clause 3 or 4, wherein a shape of the movement prevention part formed on one side of each of the first jig and the second jig is different from a shape of the movement prevention part formed on another side thereof.
6. The battery pack manufacturing device according to clause 3, 4 or 5, wherein the core molding jig includes a guide part which guides coupling of the first jig and the second jig.
7. The battery pack manufacturing device according to clause 6, wherein the guide part includes:
   a guide groove formed in the first jig; and
   a guide boss formed to protrude from the second jig to be inserted into the guide groove.
8. The battery pack manufacturing device according to any preceding clause, wherein:
   the core molding jig includes a guide path which guides a resin; and
   the guide path includes an injection port connected to the injection part, a main path which guides the resin introduced into the injection port in a lateral direction and a vertical direction of the core molding jig, and a branch path which connects the main path to the molding part.
9. The battery pack manufacturing device according to any preceding clause, wherein the mold part includes:
   a die;
   a fixing groove which is formed in an upper portion of the die and fixes the core molding jig; and
   a pressing part which is provided above the die and presses the core molding jig toward the die.
10. The battery pack manufacturing device according to any preceding clause, comprising a vacuum degassing part which removes gas in the molding part after the resin molding portion is molded by the molding part.
11. The battery pack manufacturing device according to any preceding clause, wherein the vacuum degassing part includes:
   a coupling part to which the core molding jig is coupled; and
   a gas discharge part which is provided on the coupling part and discharges the gas from the molding part.
12. A method of manufacturing a battery pack, comprising:
   a core pack forming operation of coupling a protection circuit part to an upper portion of a bare cell to form a core pack;
   a seating operation of seating the core pack on a molding part of a core molding jig; and
   a molding operation of coupling the core molding jig to a mold part and forming a resin molding portion surrounding a portion of the core pack,
   wherein a plurality of molding parts are formed in the core molding jig such that a plurality of core packs are seated on the plurality of molding parts.
13. The method of clause 12, wherein:
   the core molding jig is provided as a plurality of core molding jigs; and
   the molding part of each of the core molding jigs is used to manufacture the core pack according to various specifications.
14. The method of clause 13, wherein the molding operation includes:
   a fixing operation of fixedly pressing an upper portion of the core molding jig seated on the mold part using a press; and
   an injecting operation of injecting a resin through an injection port of the core molding jig which is being pressed by the press.
15. The method of clause 14, wherein the resin is formed of a polyamide-based hot melt resin with high adhesive strength.

## Claims

1. A battery pack manufacturing device comprising:
a core molding jig including a molding part on which a core pack is configured to be seated, the core pack having a bare cell and a protection circuit part which are coupled;
a mold part which fixes the core molding jig; and
an injection part which is provided at the mold part and is configured to perform a hot-melting process on the molding part to form a resin molding portion on the core pack,
wherein the molding part is formed as a plurality of molding parts so that a plurality of core packs can be seated on the plurality of molding parts.

2. The battery pack manufacturing device as claimed in claim 1, wherein:
the core molding jig is provided as a plurality of core molding jigs; and
the molding part of each of the core molding jigs is usable to manufacture the core pack according to various specifications.

3. The battery pack manufacturing device as claimed in claim 1 or 2, wherein:
the core molding jig includes a first jig and a second jig which are disposed to face one another; and
movement prevention parts corresponding to one another are formed in the first jig and the second jig.

4. The battery pack manufacturing device as claimed in claim 3, wherein the movement prevention parts include:
a movement prevention block formed to protrude from the first jig; and
a movement prevention groove formed to be recessed in the second jig such that the movement prevention block is inserted into the movement prevention groove.

5. The battery pack manufacturing device as claimed in claim 3 or 4, wherein a shape of the movement prevention part formed on one side of each of the first jig and the second jig is different from a shape of the movement prevention part formed on another side thereof.

6. The battery pack manufacturing device as claimed in claim 3, 4 or 5, wherein the core molding jig includes a guide part which is configured to guide coupling of the first jig and the second jig.

7. The battery pack manufacturing device as claimed in claim 6, wherein the guide part includes:
a guide groove formed in the first jig; and
a guide boss formed to protrude from the second jig to be inserted into the guide groove.

8. The battery pack manufacturing device as claimed any preceding in claim, wherein:
the core molding jig includes a guide path which is configured to guide a resin; and
the guide path includes an injection port connected to the injection part, a main path which is configured to guide the resin introduced into the injection port in a lateral direction and a vertical direction of the core molding jig, and a branch path which connects the main path to the molding part.

9. The battery pack manufacturing device as claimed in any preceding claim, wherein the mold part includes:
a die;
a fixing groove which is formed in an upper portion of the die and fixes the core molding jig; and
a pressing part which is provided above the die and is configured to press the core molding jig toward the die.

10. The battery pack manufacturing device as claimed in any preceding claim, comprising a vacuum degassing part configured to remove gas in the molding part after the resin molding portion is molded by the molding part.

11. The battery pack manufacturing device of claim 10, wherein the vacuum degassing part includes:
a coupling part to which the core molding jig is coupled; and
a gas discharge part which is provided on the coupling part and is configured to discharge the gas from the molding part.

12. A method of manufacturing a battery pack, comprising:
a core pack forming operation of coupling a protection circuit part to an upper portion of a bare cell to form a core pack;
a seating operation of seating the core pack on a molding part of a core molding jig; and
a molding operation of coupling the core molding jig to a mold part and forming a resin molding portion surrounding a portion of the core pack,
wherein a plurality of molding parts are formed in the core molding jig such that a plurality of core packs are seated on the plurality of molding parts.

13. The method of claim 12, wherein:
the core molding jig is provided as a plurality of core molding jigs; and
the molding part of each of the core molding jigs is used to manufacture the core pack according to various specifications.

14. The method of claim 13, wherein the molding operation includes:
a fixing operation of fixedly pressing an upper portion of the core molding jig seated on the mold part using a press; and
an injecting operation of injecting a resin through an injection port of the core molding jig which is being pressed by the press.

15. The method of claim 14, wherein the resin is formed of a polyamide-based hot melt resin.
